# EUROPEAN PATENT SPECIFICATION

(11) **EP 0 656 101 B1**
(45) Date of publication and mention of the grant of the patent: **07.11.2001**
(21) Application number: 93918725.8
(22) Date of filing: 09.08.1993
(51) Int. Cl.: F16B 21/00

(54) **ANCHORING RETAINER FOR THREADED FASTENER**
VERANKERUNGSVORRICHTUNG FÜR EIN GEWUNDENES BEFESTIGUNGSELEMENT
DISPOSITIF D'ANCRAGE POUR ELEMENT DE FIXATION FILETE

(30) Priority: 18.08.1992 US 931915
(43) Date of publication of application: 07.06.1995
(73) Proprietor: DRY DOCK INDUSTRIES, INC., Frenton, MI 48430 (US)
(72) Inventor: SMITH, Jon, D., Fenton, MI 48430 (US)
(74) Representative: McCallum, William Potter
(86) International application number: PCT/US93/07578
(87) International publication number: WO 94/04835

(56) References cited:
- US-A- 4 143 581
- US-A- 4 286 497
- US-A- 4 943 253
- US-A- 4 984 946
- US-A- 5 002 445

## Description

### BACKGROUND OF THE INVENTION

This application in general relates to several unique anchoring retainers for use with threaded fasteners that incorporate improvements over the prior art.

In the prior art, anchoring retainers are used to hold a threaded fastener such as a bolt or screw in a wall. One known type of anchoring retainer can be used in either a blind hole in a solid wall, or alternatively may be used in a thin wall, such as a drywall wall, where the threaded fastener extends entirely through the wall.

One known anchoring retainer is that described in US Patent 4,943,253. This patent discloses a fastener-receiving member which can be adjusted in length to be accommodated within various thicknesses of walls. A wing-like locking section is provided, which expands on tightening of the fastener to ensure an adequate grip between the wall and the retainer.

It is desirable to improve upon the prior art anchoring retainers to ensure that they securely retain the threaded fastener within the wall. To this end, it is desirable to optimize the structure of the anchoring retainer such that it locks in place on the wall at a desired position which provides the strongest connection. Further, it is an object of the present invention to develop an anchoring retainer which is easily utilizable.

### SUMMARY OF THE INVENTION

In accordance with one aspect of the invention, there is provided an anchoring retainer comprising a base at a first axial end, said base having a threaded bore to receive a threaded fastener; a member spaced axially from said base, said member having a bore for sliding on a threaded fastener, and at least a pair of arms, one inner arm and one outer arm, connecting said base and said member; said outer arm extending radially outwardly from said base and connected to a portion of said inner arm at a joint, said inner arm portion extending radially inwardly to said member; characterised in that said joint includes a hinge and at least one relief which relief in formed in the inner surface of said outer arm, said relief in combination with said hinge controlling bending movement of said radially outer and inner arms on tightening of the retainer.

These and other features of the present invention can be best understood from the following specification and drawings, of which the following is a brief description.

### BRIEF DESCRIPTION OF THE DRAWINGS

Figure 1 shows an anchoring retainer in accordance with one embodiment of the present invention.
Figure 2 is a side view of the retainer shown in Figure 1.
Figure 3 is a cross-sectional view along line 3-3 as shown in Figure 1.
Figure 4 is an end view of the retainer shown in Figure 1.
Figure 5A shows the first step in attaching the anchoring retainer shown in Figure 1 to a wall.
Figure 5B shows a subsequent step in the attachment of the retainer shown in Figure 1 to a wall.
Figure 6 shows the final position of the retainer shown in Figure 1 secured to a wall.
Figure 7 is an enlarged portion of the retainer shown in Figure 1.
Figure 8 shows yet another alternative retainer according to the present invention.
Figure 9 is a cross sectional view along line 9-9 as shown in Figure 8.
Figure 10 shows the retainer shown in Figure 8 secured to a wall.
Figure 11 is a cross-sectional view along line 11-11 as shown in Figure 10.
Figure 12 is a cross-sectional view along line 12-12 as shown in Figure 10.
Figure 13 shows yet another alternative retainer according to the present invention.
Figure 14 shows the retainer illustrated in Figure 13 secured to a wall.
Figure 15 is an enlarged view of the portion identified by circle 15 in Figure 14.

### DETAILED DESCRIPTION OF A PREFERRED EMBODIMENT

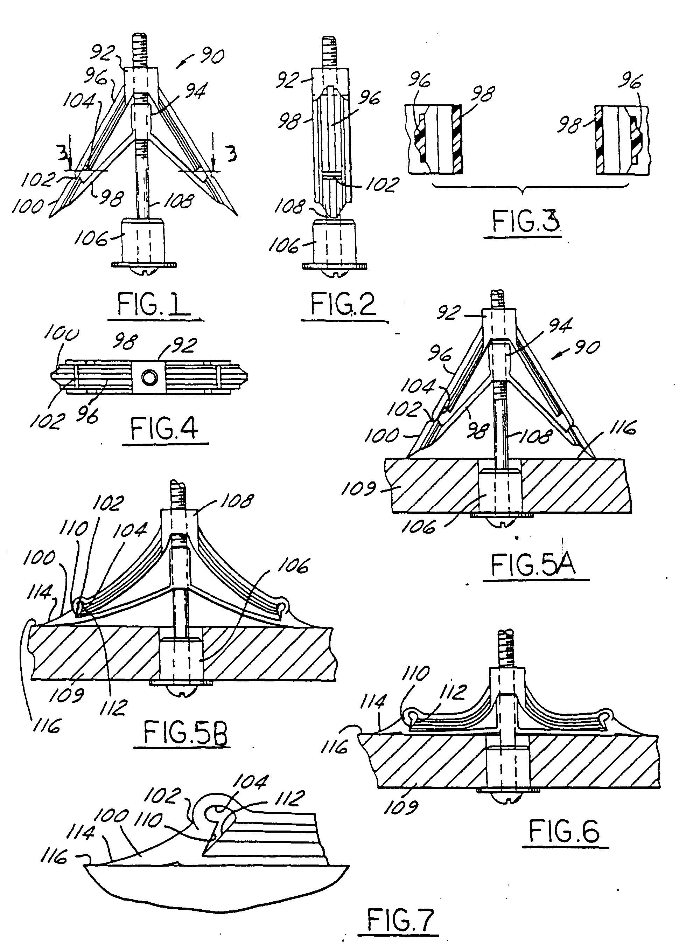

One embodiment of the present invention, in the form of anchor 90 is illustrated in Figure 1. A base 92 is connected to a pedestal 94 through a radially outwardly extending arm 96 and a radially inwardly extending arm 98. Arms 96 and 98 are connected at a joint 100 which includes a recess 102 and a hinge 104. A cap 106 is received on the threaded retainer 108. As shown in Figure 2, recess 102 is formed only on radially outer arms 96, and not on radially inner arm 98. Figure 3 shows further features of arms 96 and 98. Figure 4 shows recess 102 on arms 96 and 98.

As shown in Figure 5A, when retainer 90 is received on threaded retainer 108, joint 100 abuts an inner face 116 of thin wall 109.

As shown in Figure 5B, as the threaded retainer 108 is tightened, the arms begin to pivot about recess 102 and hinge 104. A ramped surface 110 cooperates with a mating ramped surface 112 formed on radially outer arm 96 to bias an outer tip 114 of joint 100 against inner face 116 of wall 109. This firmly secures retainer 90 on wall 109.

As shown in Figure 6, when fully tightened, ramped surface 112 has forced ramped surface 110 to pivot outwardly such that outer tip 114 is biased onto inner face 116. This is most clearly shown in Figure 7, which shows the ramped surfaces 110 and 112.

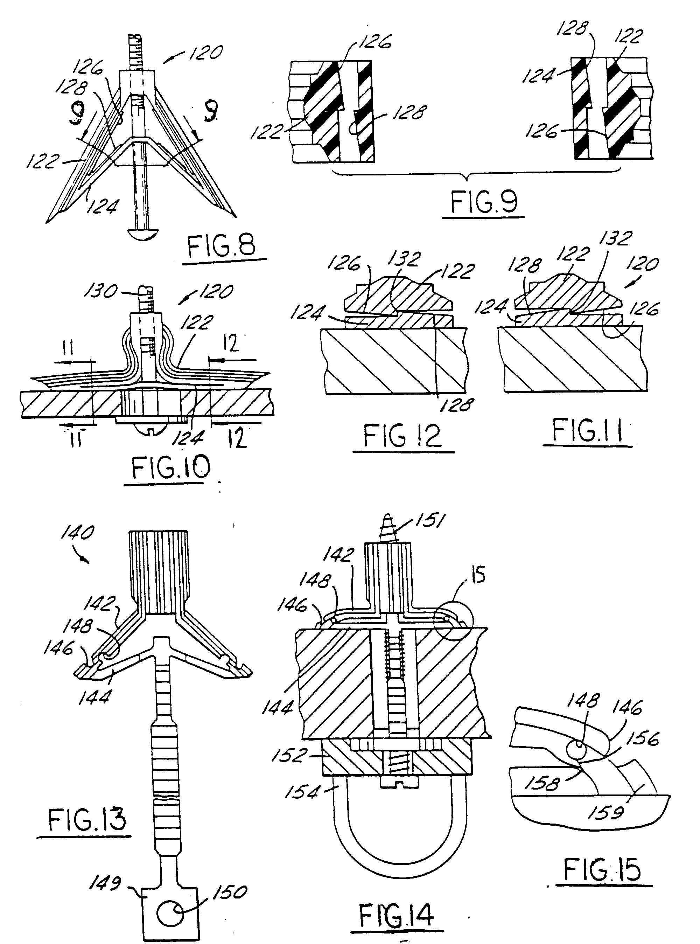

Figure 8 shows yet another embodiment anchor 120 incorporating outer arms 122 and inner arm 124. Outer arm 122 is formed with a latch surface 126, while inner arm 124 is formed with a cooperating latch surface 128.

As shown in Figure 9, surfaces 126 and 128 have opposed cliff-like flanges which causes arms 122 and 124 to be locked against relative lateral movement.

As shown in Figure 10, when retainer 120 is tightened, outer arms 122 lie on inner arms 124. As shown in Figures 11 and 12, in this position, cliff-like flanges on surfaces 126 and 128 abut to prevent relative lateral sliding movement of arms 122 and 124. This ensures the retainer 120 is firmly secured to a wall. Further, the surfaces 126 and 128 are ramped to apply a perpendicular force to the outer end of arms 122 and 12.4 against the wall. The angles of surfaces 126 and 128 may be varied to control this force.

Another embodiment retainer 140 is illustrated in Figure 13. Arms 142 are connected to inner arms 144 at a pair of hinges 146 and 148. A cap head 149 is formed with an aperture 150 to receive a tool for insertion of the retainer 140.

As shown in Figure 14, retainer 140 can be used to secure a head 152 and a hook 154. Although this is disclosed, other types of members can be connected to threaded fastener 151 used with this embodiment. As shown, outer arm 142 is received on inner arm 146, inner hinge 148 deforms into a circular shape while the outer hinge 146 allows this movement.

As shown in Figure 15, when in this position, mating ramp surfaces 156 and 158 adjacent inner hinge 148 cause an outer tip 159 of retainer 140 to be biased against a wall, similar to the previously disclosed embodiment in Figures 1-7.

All of the disclosed retainers and caps are preferably molded from suitable plastics. Several preferred embodiments of this invention have been disclosed. A worker of ordinary skill in the art would recognise, however, that certain modifications would come within the scope of these inventions. For that reason the following claims should be studied in order to determine the true scope and content of the invention.

## Claims

1. An anchoring retainer (90) comprising:
a base (92) at a first axial end, said base (92) having a threaded bore to receive a threaded fastener;
a member (94) spaced axially from said base (92), said member (94) having a bore for sliding on a threaded fastener, and at least a pair of arms, one inner arm (98) and one outer arm (96), connecting said base (92) and said member (94);
said outer arm (96) extending radially outwardly from said base (92) and connected to a portion of said inner arm (98) at a joint (100), said inner arm portion extending radially inwardly to said member (94); **characterized in that**
said joint (100) includes a hinge and at least one relief (104) which relief is formed in the inner surface of said outer arm, said relief in combination with said hinge controlling bending movement of said radially outer and inner arms (96, 98) on tightening of the retainer.

2. An anchoring retainer (90) as recited in claim 1, wherein the relief (104) forms a hinge (104) and said radially outer and inner arms (96, 98) pivot about the hinge (104) as the retainer (90) is tightened.

3. An anchoring retainer (90) as recited in claim 2, wherein the relief (104) is arranged to cause the joint (100) to pivot and apply pressure against a wall via an outer tip (114) of said joint (100) as the retainer (90) is tightened.

4. An anchoring retainer (90) as recited in any of claims 1, 2 or 3, wherein said at least one relief (104) formed in the inner surface of said outer arm (96) is constructed to provide at least two ramped surfaces (110, 112) that will abut each other to control deformation of said radially outer and inner arms (96, 98) as the retainer (90) is tightened.

5. An anchoring retainer (90) as recited in claim 4, wherein the relief (104) with abutting ramped surfaces (110, 112) in the outer arm (96) controls the bending movement of said radially outer and inner arms (96, 98) and biases an outer tip (114) of the joint (100) into contact with a wall as the retainer (90) is tightened.

6. An anchoring retainer (90) as recited in claim 4, wherein the angles of the abutting ramped surfaces (110, 112) control the bending movement of said radially outer and inner arms (96, 98).

7. An anchoring retainer (90) as recited in claim 6, wherein said angles can vary.

8. An anchoring retainer (90) as recited in claim 6, wherein the form of said relief (104; 148) may be varied to control the shape and dimension of the retainer.

9. An anchoring retainer as recited in claim 6 wherein the relief (104) with the ramped surface (110, 112) in said outer arm (96) will produce pivoting of the joint (100) to forcibly apply pressure against a wall as the retainer (90) is tightened.

## Patentansprüche

1. Verankerungsvorrichtung (90), die aufweist:
eine Grundplatte (92) an einem ersten axialen Ende, wobei die Grundplatte (92) eine Gewindebohrung aufweist, um eine Befestigungsschraube aufzunehmen;
ein Element (94), das axial mit Abstand von der Grundplatte (92) angeordnet ist, wobei das Element (94) aufweist; eine Bohrung, in der eine Befestigungsschraube gleiten kann; und mindestens ein Paar Arme, einen inneren Arm (98) und einen äußeren Arm (96), die die Grundplatte (92) und das Element (94) verbinden;
wobei sich der äußere Arm (96) radial nach außen von der Grundplatte (92) aus erstreckt und mit einem Abschnitt des inneren Armes (98) in einer Verbindung (100) verbunden ist, wobei sich der innere Armabschnitt radial nach innen zum Element (94) erstreckt; **dadurch gekennzeichnet, daß**
die Verbindung (100) umfaßt: ein Gelenk; und mindestens eine Aussparung (104), wobei die Aussparung in der Innenfläche des äußeren Armes gebildet wird, wobei die Aussparung in Verbindung mit dem Gelenk die Biegebewegung des radial äußeren und inneren Armes (96, 98) beim Anziehen der Vorrichtung steuert.

2. Verankerungsvorrichtung (90) nach Anspruch 1, bei der die Aussparung (104) ein Gelenk (104) bildet; und bei der sich der radial äußere und innere Arm (96, 98) um das Gelenk (104) drehen, während die Vorrichtung (90) angezogen wird.

3. Verankerungsvorrichtung (90) nach Anspruch 2, bei der die Aussparung (104) angeordnet ist, um zu bewirken, daß sich die Verbindung (100) dreht und einen Druck gegen eine Wand über ein äußeres Ende (114) der Verbindung (100) zur Anwendung bringt, während die Vorrichtung (90) angezogen wird.

4. Verankerungsvorrichtung (90) nach einem der Ansprüche 1, 2 oder 3, bei der mindestens eine Aussparung (104), die in der Innenfläche des äußeren Armes (96) gebildet wird, so konstruiert ist, daß mindestens zwei geneigte Flächen (110, 112) bereitgestellt werden, die aneinander anstoßen werden, um die Verformung des radial äußeren und inneren Armes (96, 98) zu steuern, während die Vorrichtung (90) angezogen wird.

5. Verankerungsvorrichtung (90) nach Anspruch 4, bei der die Aussparung (104) mit den anstoßenden geneigten Flächen (110, 112) im äußeren Arm (96) die Biegebewegung des radial äußeren und inneren Armes (96, 98) steuert und ein äußeres Ende (114) der Verbindung (100) in Berührung mit einer Wand vorspannt, während die Vorrichtung (90) angezogen wird.

6. Verankerungsvorrichtung (90) nach Anspruch 4, bei der die Winkel der anstoßenden geneigten Flächen (110, 112) die Biegebewegung des radial äußeren und inneren Armes (96, 98) steuern.

7. Verankerungsvorrichtung (90) nach Anspruch 6, bei der die Winkel variieren können.

8. Verankerungsvorrichtung (90) nach Anspruch 6, bei der die Form der Aussparung (104; 148) verändert werden kann, um die Form und die Abmessung der Vorrichtung zu steuern.

9. Verankerungsvorrichtung nach Anspruch 6, bei der die Aussparung (104) mit der geneigten Fläche (110, 112) im äußeren Arm (96) ein Drehen der Verbindung (100) bewirken wird, um zwangläufig einen Druck gegen eine Wand zur Anwendung zu bringen, während die Vorrichtung (90) angezogen wird.

## Revendications

1. Dispositif d'ancrage (90), comprenant:
une base (92) au niveau d'une première extrémité axiale, ladite base (92) comportant un alésage fileté destiné à recevoir un élément de fixation fileté;
un élément (94) espacé axialement de ladite base (92), ledit élément (94) comportant un alésage en vue d'un glissement sur un élément de fixation fileté, et au moins une paire de bras, un bras interne (98) et un bras externe (96) reliant ladite base (92) et ledit élément (94);
ledit bras externe (96) s'étendant radialement vers l'extérieur à partir de ladite base (92) et étant relié à une partie dudit bras interne (8) au niveau d'un joint (100), ladite partie de bras interne s'étendant radialement vers l'intérieur, en direction dudit élément (94); **caractérisé en ce que**
ledit joint (100) englobe une charnière et au moins un évidement (104), l'évidement étant formé dans la surface interne dudit bras externe, ledit évidement contrôlant en combinaison avec ladite charnière le mouvement de flexion desdits bras radialement externe et interne (96, 98) lors du serrage du dispositif d'ancrage.

2. Dispositif d'ancrage (90) selon la revendication 1, dans lequel l'évidement (104) forme une charnière (104), lesdits bras radialement externe et interne (96, 98) pivotant autour de la charnière (104) lors du serrage du dispositif d'ancrage (90).

3. , Dispositif d'ancrage (90) selon la revendication 2, dans lequel l'évidement (104) est agencé de sorte à entraîner le pivotement du joint (100) et l'application d'une pression contre un mur par l'intermédiaire d'une pointe externe (114) dudit joint (100) lors du serrage dudit dispositif d'ancrage (90).

4. Dispositif d'ancrage (90) selon l'une quelconque des revendications 1, 2 ou 3, dans lequel ledit au moins un évidement (104) formé dans la surface interne dudit bras externe (96) est construit de sorte à établir au moins deux surfaces en rampe (110, 112), butant l'une contre l'autre pour contrôler la déformation desdits bras radialement externe et interne (96, 98) lors du serrage du dispositif d'ancrage (90).

5. Dispositif d'ancrage (90) selon la revendication 4, dans lequel l'évidement (104) comportant les surfaces de butée en rampe (110, 112) dans le bras externe (96) contrôle le mouvement de flexion desdits bras radialement externe et interne (96, 98) et exerce une poussée sur une pointe externe (114) du joint (100) pour la mettre en contact avec un mur lors du serrage du dispositif d'ancrage (90).

6. Dispositif d'ancrage (90) selon la revendication 4, dans lequel les angles des surfaces de butée en rampe (110, 112) contrôlent le mouvement de flexion desdits bras radialement externe et interne (96, 98).

7. Dispositif d'ancrage (90) selon la revendication 6, dans lequel lesdits angles peuvent varier.

8. Dispositif d'ancrage (90) selon la revendication 6, dans lequel la forme dudit évidement (104; 148) peut être changée pour contrôler la forme et la taille du dispositif d'ancrage.

9. Dispositif d'ancrage selon la revendication 6, dans lequel l'évidement (104) comportant la surface en rampe (110, 112) dans ledit bras externe (96) entraîne le pivotement du joint (100) et l'application forcée d'une pression contre un mur lors du serrage du dispositif d'ancrage (90).
